# EUROPÄISCHE PATENTSCHRIFT

(11) **EP 3 740 738 B1**
(45) Veröffentlichungstag und Bekanntmachung des Hinweises auf die Patenterteilung: **08.09.2021**
(21) Anmeldenummer: 19728058.9
(22) Anmeldetag: 03.06.2019
(51) Int. Cl.: G01C 21/20, G01C 21/32

(54) **VERFAHREN ZUR POSITIONSBESTIMMUNG EINES FAHRZEUGS**
METHOD FOR DETERMINING THE POSITION OF A VEHICLE
PROCÉDÉ DE DÉTERMINATION DE POSITION D'UN VÉHICULE

(30) Priorität: 22.06.2018 DE 102018005005
(43) Veröffentlichungstag der Anmeldung: 25.11.2020
(73) Patentinhaber: Daimler AG, 70372 Stuttgart (DE)
(72) Erfinder: RIES, Florian, 70599 Stuttgart (DE); HAUEIS, Martin, 71116 Gaertringen (DE); SCHUSTER, Frank, 71032 Boeblingen (DE); GHANAAT, Mohammad, 70565 Stuttgart (DE)
(74) Vertreter: JENSEN & SON
(86) Internationale Anmeldenummer: PCT/EP2019/064330
(87) Internationale Veröffentlichungsnummer: WO 2019/243031

(56) Entgegenhaltungen:
- DE-A1-102016 225 213
- US-A1- 2011 118 979

## Beschreibung

Die Erfindung betrifft ein Verfahren zur Positionsbestimmung eines Fahrzeugs nach den Merkmalen des Oberbegriffs des Anspruchs 1.

Im Stand der Technik gemäß US 2011/0118979 A1 wird ein Verfahren zur Positionsbestimmung eines Fahrzeugs beschrieben. Durch eine Kombination von Daten eines Navigationssystems und Daten einer Koppelnavigation erfolgt eine Abschätzung der Position. Die Bestimmung einer Map-Matching-Position erfolgt unter Verwendung wenigstens einer satellitenbasierten Position und der Position aus der Koppelnavigation in Verbindung mit einer Vielzahl von Elementen aus einer Karte. Eine Bestimmung einer Integrität, also der Korrektheit, der Positionsabschätzung erfolgt durch einen Vergleich einer statistischen Berechnung der "Map-Matching" Position und der Positionsabschätzung.

Aus der DE 10 2016 225213 A1 ist ein Verfahren zur Positionsbestimmung eines Fahrzeugs bekannt, bei dem Sensor-Landmarkenobjekte, die mit einer Sensorik des Fahrzeugs erfasst werden, mit Karten-Landmarkobjekten abgeglichen werden, die in einer Karte hinterlegt sind. Der Abgleich beruht dabei auf der der Bildung von Assoziationen zwischen den Sensor-Landmarkenobjekten und den Karten-Landmarkenobjekten.

Der Erfindung liegt die Aufgabe zu Grunde, ein gegenüber dem Stand der Technik verbessertes Verfahren zur Positionsbestimmung eines Fahrzeugs anzugeben.

Die Aufgabe wird erfindungsgemäß gelöst durch ein Verfahren zur Positionsbestimmung eines Fahrzeugs mit den Merkmalen des Anspruchs 1.

Vorteilhafte Ausgestaltungen der Erfindung sind Gegenstand der Unteransprüche.

Beim erfindungsgemäßen Verfahren zur Positionsbestimmung eines Fahrzeugs werden Sensor-Landmarkenobjekte, die mittels einer Sensorik des Fahrzeugs erfasst werden, mit Karten-Landmarkenobjekten, die in einer digitalen Karte, insbesondere in einem Kartenausschnitt, hinterlegt sind, verglichen und durch Bildung von Landmarken-Assoziationen zwischen den Sensor-Landmarkenobjekten und Karten-Landmarkenobjekten werden eine Mehrzahl von Positionshypothesen gebildet, die Positionen repräsentieren, welche als Fahrzeugpositionen in Frage kommen. Durch eine Analyse aller Positionshypothesen und ihrer räumlichen Beziehungen zueinander mittels einer probabilistischen Analyse wird für jede dieser Positionshypothesen ein Integritätswert ermittelt. Durch eine Filterung dieser Positionshypothesen nach ihren Integritätswerten wird eine Untermenge an Positionshypothesen ermittelt, die bezüglich ihrer Integritätswerte eine durch einen Integritätsgrenzwert vorgegebene Anforderung an die Positionsbestimmung des Fahrzeugs erfüllen.

Das erfindungsgemäße Verfahren ist somit insbesondere ein Verfahren zur landmarkenbasierten Positionsbestimmung. Bei bereits bekannten Verfahren werden sensorisch erfasste Landmarken, beispielsweise Schilder, Pfosten und/oder andere Landmarkenobjekte, mit in einer hochgenauen Karte hinterlegten Landmarkenobjekten verglichen. Diese bekannten Verfahren starten mit einer Initialisierung der Position, z.B. mittels eines satellitengestützten Lokalisierungssystems (GNSS), prädizieren diese dann mittels Fahrzeugodometrie und Korrigieren die Position mit den jeweils nächstliegenden Positionshypothesen aus den zuvor genannten Abgleichen. Im Gegensatz zu dieser bekannten Vorgehensweise erfolgt der Abgleich bei der erfindungsgemäßen Lösung in den drei genannten Schritten.

Das heißt, zunächst erfolgt ein umfassendes Landmark-matching. Dabei werden Sensor-Landmarkenobjekte, die über einen vorgegebenen Zeitraum und/oder über eine vorgegebene Streckenlänge mittels der Sensorik des Fahrzeugs erfassten wurden, insbesondere auch bereits vom Fahrzeug passierte Sensor-Landmarkenobjekte, mit Karten-Landmarkenobjekten, die in dem auch als Kartenhorizont bezeichneten Kartenausschnitt hinterlegt sind, verglichen, d.h. es werden nicht nur die der aktuellen Position nächstliegenden Landmarkenobjekte betrachtet. Der Vergleich findet somit über eine mitgeschriebene auch als Signatur bezeichnete Historie von Landmarkenobjekten statt. Dieser Vergleich liefert eine Vielzahl von Positionshypothesen. Die anschließende Analyse aller Positionshypothesen mittels der probabilistischen Analyse liefert für jede dieser Positionshypothesen einen Integritätswert, d. h. ein Maß der Korrektheit der Landmarken-Assoziation zwischen dem Sensor-Landmarkenobjekt und dem Karten-Landmarkenobjekt, die der jeweiligen Positionshypothese zugrunde liegen. Das anschließende Filtern der Positionshypothesen nach ihren Integritätswerten liefert eine Untermenge an so genannten "good enough hypotheses", d. h. Positionshypothesen, deren Integritätswerte die vorgegebenen Anforderungen erfüllen. Durch diese Anforderung wird vorgegeben, wie zuverlässig, d.h. wie integer die Positionsbestimmung sein soll. Mit anderen Worten, es wird vorgegeben, wie wahrscheinlich ein nicht eingrenzbarer Lokalisierungsfehler maximal sein darf.

Die "good enough hypotheses" werden in einem Lokalisierungsfilter verarbeitet, welcher aus den "good enough hypotheses", die Wahrscheinlichkeitsverteilung der Fahrzeugposition berechnet. Das Lokalisierungsfilter ist beispielsweise als Histogrammfilter ausgefürht. Da nur integre, d.h. zuverlässige Informationen verarbeitet wurden, ist die so berechnete Wahrscheinlichkeitsverteilung auch integer. Sie gibt also verlässlichen Aufschluss darüber, wie wahrscheinlich die Fahrzeugposition an jeder Stelle des betrachteten Kartenausschnitts ist.

Das erfindungsgemäße Verfahren ermöglicht somit eine Berechnung eines sogenannten "Protection Limits", d. h. einer garantierten Fehlerobergrenze, mit einer landmarkenbasierten Positionsbestimmung. Landmarkenobjekte können hierbei beliebige ortsgebundene Merkmale sein, auch abstraktere Darstellungen von Sensordetektionen wie Radar-Cluster, Merkmalsdeskriptoren in einem Bild oder Punkte/Punktecluster einer Lidar-Punktwolke.

Bei diesem Verfahren werden jedoch nicht lediglich die der aktuellen Position nächstliegenden Landmarken-Assoziationen aus sensorisch erfassten Landmarken, wie Schilder, Pfosten usw., mit in der hochgenauen Karte hinterlegten Landmarkenobjekten abgeglichen, sondern die mitgeschriebenen Historien (Signaturen) der Landmarkenobjekte werden vor Verarbeitung in der Positionsschätzung einer probabilistischen Analyse unterzogen. Dadurch können fehlleitende Informationen mit einer berechenbaren Restfehlerrate ausgeschlossen werden, welche durch Variation der Signaturgrößen an die Integritätsanforderungen angepasst werden kann.

Landmarken können hierbei beliebige ortsgebundene Merkmale sein, auch abstraktere Darstellungen von Sensordetektionen wie Radar-Cluster, Merkmalsdeskriptoren in einem Bild oder Punkte/Punktecluster einer Lidar-Punktwolke.

Das erfindungsgemäße Verfahren ermöglicht eine integre Positionsbestimmung ohne ein globales Navigationssatellitensystem. Dies ist besonders dann vorteilhaft, wenn eine Sichtbarkeit von Satelliten des globalen Navigationssatellitensystems zu eingeschränkt ist und so genannte Multipath-Effekte zu groß für andere Verfahren sind, beispielsweise für Verfahren ähnlich RAIM (Receiver-Autonomous Integrity Monitoring), d. h. insbesondere bei einer Fahrt durch Häuserschluchten und/oder bei einer bedeckten Umgebung.

Des Weiteren ermöglicht das Verfahren eine Kombination mit einem auf einem globalen Navigationssatellitensystem basierenden Integritätskonzept. Nur wenn die Positionen, welche auf beide Weisen ermittelt wurden, mit einem Protection Limit, d. h. mit einer Fehlerobergrenze, abgesichert sind, können sie zu einer noch besser abgesicherten Position fusioniert werden. Durch eine Schnittmenge der Protection Limits, d. h. der Fehlerobergrenzen, steigt eine Verfügbarkeit engerer Fehlerobergrenzen bei den Einzelverfahren vergleichbarer Falschmeldungsrate. Hingegen erreicht man durch deren Vereinigung eine um mehrere Größenordnungen niedrigere Falschmeldungsrate.

Ausführungsbeispiele der Erfindung werden im Folgenden anhand von Zeichnungen näher erläutert.

Dabei zeigen:
- Fig. 1: schematisch einen Ablauf einer Ermittlung einer Position eines Fahrzeugs in einer Karte,
- Fig. 2: einen Anwendungsfall eines hochautomatisierten Fahrbetriebs mittels einer Positionierung eines Fahrzeugs in einer hochgenauen Karte,
- Fig. 3: einen weiteren Anwendungsfall eines hochautomatisierten Fahrbetriebs mittels einer Positionierung eines Fahrzeugs in einer hochgenauen Karte,
- Fig. 4: schematisch eine Begrenzungsbox um eine Position eines Fahrzeugs,
- Fig. 5: schematisch eine Modellverteilung und eine tatsächliche Verteilung von Positionierungsinformationen,
- Fig. 6: Ableitung einer Fehlerüberschreitung,
- Fig. 7: schematisch Zusammenhänge, welche zu einem nützlichen oder irreführenden Informationsgewinn führen,
- Fig. 8: schematisch ein Vergleich von Landmarkenobjekten aus Sensordaten mit Landmarkenobjekten einer Karte,
- Fig. 9: schematisch eine probabilistische Analyse,
- Fig. 10: schematisch eine Einbindung von Informationen,
- Fig. 11: schematisch eine tatsächliche Verteilung von Fehlern, und
- Fig. 12: schematisch eine angenommene Verteilung von Fehlern.

Einander entsprechende Teile sind in allen Figuren mit den gleichen Bezugszeichen versehen.

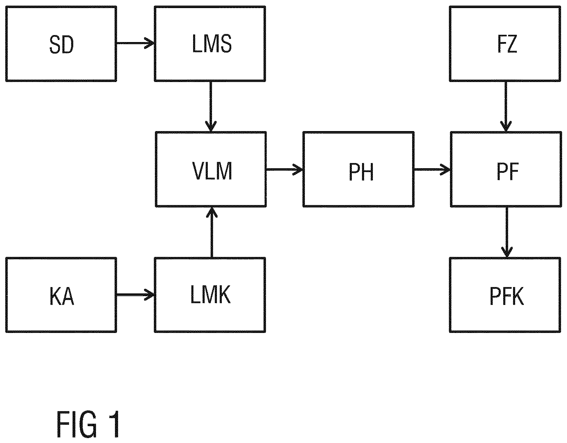

Anhand der Figuren 1 bis 12 wird im Folgenden ein Verfahren zur landmarkenbasierten Positionsbestimmung eines Fahrzeug 1 beschrieben, insbesondere eine Bestimmung einer Obergrenze für Fehler einer solchen landmarkenbasierten Positionsbestimmung.

Hochautomatisiertes Fahren (HAF) erfordert hochgenaue Karten, insbesondere topographische Karten, zur Ergänzung von Informationen einer Sensorik des Fahrzeugs 1. Eine Positionsbestimmung bestimmt die genaue Position des Fahrzeugs 1 in einer solchen Karte und stellt auf diese Weise ein erweitertes Umgebungsmodell bereit. Um dieses erweiterte Umgebungsmodell jedoch ernsthaft nutzen zu können, zum Beispiel für Objekt-Spurzuordnungen in einer Kollisionsvermeidung, muss die Positionsbestimmung zusätzlich zur üblichen Genauigkeitsschätzung (Sigmas, Standardabweichung) eine integre Fehlerobergrenze PL ausgeben. Die integre Fehlerobergrenze PL stellt dabei einen Bereich dar, in dem sich das Fahrzeug mit Sicherheit befindet, wenn man unter Sicherheit versteht, dass eine vorgegebene zulässige Fehlerrate, z.B. 1 Fehler auf 10.000.000 km, nicht überschritten wird.
Bei einer GNSS-basierten Positionsbestimmung, d. h. bei einer auf einem globalen Navigationssatellitensystem basierenden Positionsbestimmung, gibt es zum Beispiel im Luftfahrtbereich bereits ähnliche Ansätze. Ein sogenanntes Integrity Monitoring (zum Beispiel RAIM, Receiver-Autonomous Integrity Monitoring) gibt Fehlerobergrenzen PL aus, genannt Protection Limits. Bei bodengestützten Systemen ist das Integrity Monitoring aufgrund von Satellitenverdeckungen und Multi-Path Effekten schwieriger. Zudem sind im Fahrzeugbau Kostenerwägungen und des Weiteren auch Designerwägungen, insbesondere bezüglich am Fahrzeug 1 anzuordnender Antennen, zu berücksichtigen, welche zu weiteren Einschränkungen der Leistungsfähigkeit führen. Integrity Monitoring Konzepte für die landmarkenbasierte Positionsbestimmung sind daher bisher selten und gehen nicht über eine Ausreißer-Detektion oder binäre "Gütesiegel" hinaus. Ein Protection Limit, d. h. eine Fehlerobergrenze PL, wird von keinem dieser Verfahren bereitgestellt.

Das im Folgenden beschriebene Verfahren ermöglicht die Berechnung eines solchen Protection Limits, d. h. einer Fehlerobergrenze PL, mit einer landmarkenbasierten Positionsbestimmung. Wie bei einer herkömmlichen landmarkenbasierten Positionsbestimmung werden dabei sensorisch erfasste Sensor-Landmarkenobjekte LMS, beispielsweise Schilder, Pfosten usw., mit in der hochgenauen Karte hinterlegten und hieraus abgerufenen Karten-Landmarkenobjekten LMK verglichen. Landmarken können hierbei beliebige ortsgebundene Merkmale sein, auch abstraktere Darstellungen von Sensordetektionen wie Radar-Cluster, Merkmalsdeskriptoren in einem Bild oder Punkte/Punktecluster einer Lidar-Punktwolke. Der Vergleich findet zwischen mitgeschriebenen Historien (Signaturen) von Sensor-Landmarkenobjekten und Karten-Landmarkenobjekten statt..

In dem Verfahren werden durch den Vergleich VLM von Sensor-Landmarkenobjekten LMS, die mittels der Sensorik des Fahrzeugs 1 erfasste werden, mit Karten-Landmarkenobjekten LMK, die in der Karte, insbesondere in einem Kartenausschnitt KA hinterlegt sind und aus der Karte abgerufen werden, Landmarken-Assoziationen zwischen den Sensor-Landmarkenobjekten LMS und Karten-Landmarkenobjekten LMK gebildet, d.h. es wird festgestellt, welche Sensor-Landmarkenobjekte LMS zu welchen Karten-Landmarkenobjekten LMK passen könnten, und basierend auf den verschiedenen möglichen Landmarken-Assoziationen, die bei der Menge der Sensor- und Karten-Landmarkenobjekte gebildet werden können, werden eine Mehrzahl von Positionshypothesen als in Frage kommende Fahrzeugpositionen ermittelt. Der Kartenausschnitt KA wird auch als Kartenhorizont bezeichnet. Durch eine Analyse aller ermittelter Positionshypothesen und ihrer räumlichen Beziehungen zueinander mittels einer probabilistischen Analyse PA wird für jede Positionshypothese ein Integritätswert ermittelt, der ein Maß für die Zuverlässigkeit der jeweiligen Positionshypothese ist. Für die Integritätswerte wird ein Integritätsgrenzwert vorgegeben. Durch eine Filterung F der Positionshypothesen nach ihren vorgegebenen Integritätswerten bezüglich des Integritätsgrenzwertes wird eine Untermenge an Positionshypothesen ermittelt, die eine durch den Integritätsgrenzwert vorgegebene Anforderung erfüllen, d.h. es werden aus der Menge aller ermittelten Positionshypothesen diejenigen Positionshypothesen identifiziert, die einen für eine integre Positionsbestimmung des Fahrzeugs 1 ausreichenden Integritätswert aufweisen, wobei durch den Integritätsgrenzwert definiert ist, welcher Integritätswert ausreichend ist.

D. h. zunächst erfolgt ein umfassendes Landmark-Matching. Dabei werden alle Sensor-Landmarkenobjekte LMS, die über einen vorgegebenen Zeitraum und/oder über einer vorgegebenen Streckenlänge durch die Sensorik des Fahrzeugs 1 erfasst worden sind, insbesondere auch bereits vom Fahrzeug 1 passierte Sensor-Landmarkenobjekte LMS, mit den in dem Kartenausschnitt KA hinterlegten Karten-Landmarkenobjekten LMK verglichen. Der Vergleich VLM findet somit über eine mitgeschriebene Historie (Signatur) von Sensor-Landmarkenobjekten LMS statt. Dieser Vergleich VLM liefert eine Vielzahl von Positionshypothesen. Die anschließende Analyse aller Positionshypothesen mittels der probabilistischen Analyse PA liefert für jede dieser Positionshypothesen einen Integritätswert, d. h. einem Wert zur Beurteilung der Korrektheit der Landmarken-Assoziationen, auf deren Grundlage die jeweilige Positionshypothese gebildet worden ist. Das anschließende Filtern F der Positionshypothesen nach deren Integritätswerten in Bezug auf den vorgegebenen Integritätsgrenzwert liefert eine Untermenge von Positionshypothesen, die nachfolgend als "good enough hypotheses" bezeichnet wird. Eine "good enough Hypothese" ist eine Hypothese deren Integrität mindestens dem Integritätsgrenzwert entspricht. Durch den Integritätsgrenzwert wird vorgegeben, welche Anforderungen an deine Positionshypothese für eine integre Lokalisierung des Fahrzeugs 1 gestellt werden.

Aus der Menge der "good enough hypotheses", die eine Menge von wahrscheinlichen Fahrzeugpositionen repräsentieren wird in einem Lokalisierungsfilter II, welches beispielsweise als Histogrammfilter ausgeführt ist, eine Wahrscheinlichkeitsverteilung der Fahrzeugpositionberechnet. Da nur integre Informationen im Lokalisierungsfilter verarbeitet werden, ist die berechnete Wahrscheinlichkeitsverteilung auch integer. Sie gibt also verlässlichen Aufschluss darüber, wie wahrscheinlich die Fahrzeugposition an jeder Stelle des betrachteten Kartenausschnitts ist.

Das Verfahren ermöglicht somit die Berechnung des Protection Limits, d. h. der Fehlerobergrenze PL, mit einer landmarkenbasierten Positionsbestimmung.

Im Folgenden werden der Hintergrund des Verfahrens und dessen Ablauf nochmals detailliert erläutert. Zunächst zum Hintergrund des Verfahrens:
Das Verfahren ist insbesondere zur Durchführung eines hochautomatisierten Fahrbetriebs von Fahrzeugen 1 verwendbar. Während eines solchen hochautomatisierten Fahrens (HAD) benötigen Fahrzeuge 1 detaillierte Kenntnisse über einen vorausliegenden Streckenabschnitt, um erforderliche Fahrmanöver entsprechend planen zu können. Entsprechende Umgebungsinformationen, welche mittels der Sensorik des Fahrzeugs 1 ermittelt werden können, sind jedoch bezüglich einer Reichweite sehr begrenzt.

Daher werden diese Umgebungsinformationen durch eine hochgenaue Karte bereitgestellt, in welcher diese Umgebungsinformationen positionsbezogen gespeichert sind. Die korrekten Umgebungsinformationen kann das Fahrzeug 1 aus der Karte jedoch nur dann beziehen, wenn es in der Karte korrekt positioniert werden kann. Aus praktischen Gründen, insbesondere aus Gründen eines vorhandenen Speicherplatzes und/oder eines erforderlichen Verarbeitungsaufwandes, wird im Fahrzeug 1 nur ein begrenzter Kartenausschnitt KA der Karte, auch als Horizont oder Kartenhorizont bezeichnet, bereitgestellt. Zusammen mit der Position des Fahrzeugs 1 liefert dieser Kartenhorizont ein Umgebungsmodell, das die Sensorwahrnehmung ergänzt.

Zur Positionierung in der Karte, genauer gesagt in diesem Kartenausschnitt KA, kann das Fahrzeug 1, beispielsweise alternativ oder zusätzlich zu einer Positionierung auf Basis eines globalen Navigationssatellitensystems (GNSS), vordefinierte Karten-Landmarkenobjekte LMK, beispielsweise Objekte am Straßenrand, Fahrbahnmarkierungen, Pfosten und andere Strukturen, sowie Fahrspurattribute in der Karte mit den entsprechenden von der Sensorik des Fahrzeugs 1 wahrgenommenen Sensor-Landmarkenobjekten LMS vergleichen und dadurch die Position des Fahrzeugs 1 in der Karte ermitteln.

Figur 1 zeigt einen Ablauf einer solchen Ermittlung der Position PFK des Fahrzeugs 1 in der Karte. Eingangsdaten sind Sensordaten SD der Sensorik des Fahrzeugs 1 und der lokale Kartenausschnitt KA. Aus den Sensordaten SD werden mögliche Sensor-Landmarkenobjekte LMS ermittelt. Aus dem Kartenausschnitt KA werden in der Karte verzeichnete Karten-Landmarkenobjekte LMK ermittelt. Nun wird ein Vergleich VLM dieser Landmarkenobjekte LMS, LMK durchgeführt. Daraus werden mehrere Positionshypothesen PH ermittelt. Diese Positionshypothesen PH und ein Fahrzustand FZ des Fahrzeugs 1 werden in einem probabilistischen Filter PF verarbeitet und als Ergebnis dieser Verarbeitung wird die Position PFK des Fahrzeugs 1 in der Karte ermittelt.

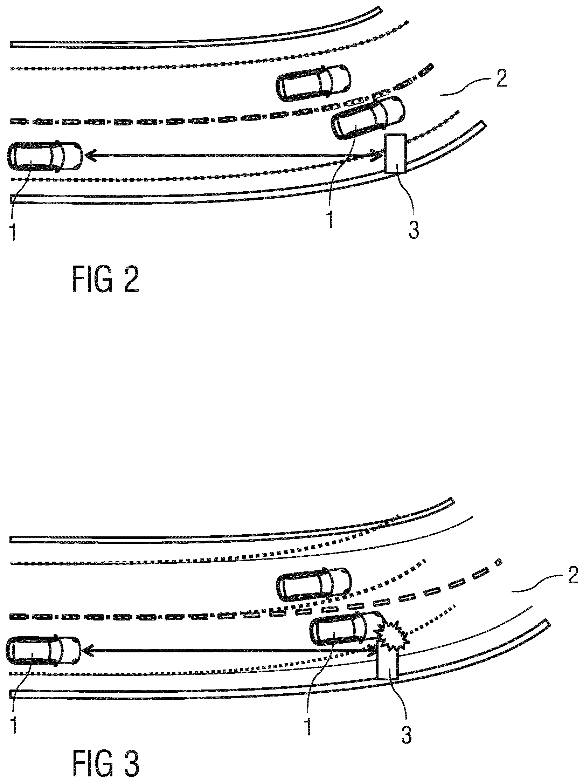

Die Figuren 2 und 3 zeigen beispielhafte Anwendungsfälle eines hochautomatisierten Fahrbetriebs mittels einer Positionierung des Fahrzeugs 1 in einer hochgenauen Karte. Im Beispiel gemäß Figur 2 ist eine korrekte Positionierung in der Karte erfolgt. Dadurch wird eine korrekte Vorhersage der vom Fahrzeug 1 befahrenen Fahrspur 2 in der Kurve ermöglicht, wodurch ein erfolgreiches Vermeiden einer Kollision des Fahrzeugs 1 mit einem Hindernis 3 in der Kurve ermöglicht wird.

Figur 3 zeigt mögliche Folgen einer falschen Positionierung des Fahrzeugs 1 in der Karte. Daraus resultiert eine falsche Vorhersage der vom Fahrzeug 1 befahrenen Fahrspur 2 in der Kurve, wodurch das Risiko einer Kollision des Fahrzeugs 1 mit dem Hindernis 3 besteht.

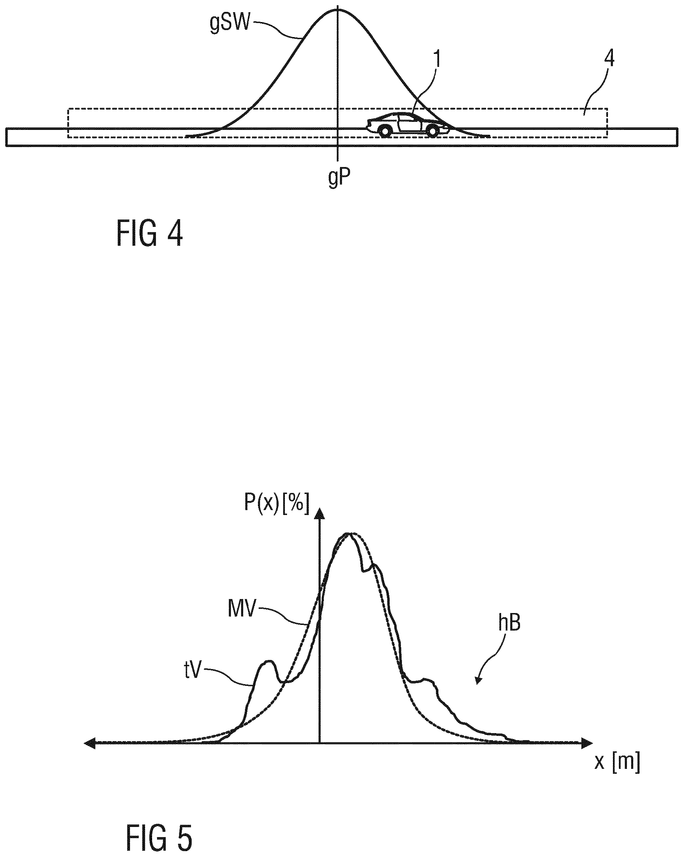

Für solche Anwendungsfälle werden zuverlässige und vollständige Informationen über die Qualität der Positionierung benötigt. Sigma-Werte, d. h. Werte einer üblichen Genauigkeitsschätzung, spiegeln nur eine aktuelle Passgenauigkeit der Daten wider, aber die Positionierungsinformationen P sind oft zweideutig und/oder multimodal und falsche Ergebnisse können beliebig weit vom geschätzten Wert abweichen. Daher wird eine sichere Begrenzungsbox 4 um die geschätzte Position gP benötigt, die mit Sicherheit die wahre Position enthält, zumindest bis zu einer vorgegebenen zulässigen Fehlerrate, wie in Figur 4 gezeigt. Hier sind das Fahrzeug 1, die geschätzte Position gP des Fahrzeugs 1, der geschätzte Sigma-Wert gSW (Standardabweichung), und die sichere Begrenzungsbox 4 dargestellt.

Für GNSS-basierte Methoden, d. h. für Methoden auf Basis eines globalen Navigationssatellitensystems, gibt es bereits bewährte Methoden zur Überwachung einer Integrität der Positionsbestimmung. Einige dieser Methoden benötigen nur Empfängerdaten, beispielsweise Receiver Autonomous Integrity Monitoring (RAIM). Die daraus resultierenden sicheren Begrenzungsboxen 4 werden Protection Limits genannt, d. h. Fehlerobergrenzen PL.

Wie bereits oben erwähnt, sind für die landmarkenbasierte Positionierung Methoden für das Integrity Monitoring, d. h. für die Integritätsüberwachung, bisher selten und gehen nicht über eine Ausreißer-Detektion oder binäre "Gütesiegel" hinaus. Ein Protection Limit, d. h. eine Fehlerobergrenze PL, wird von keinem dieser Verfahren bereitgestellt.

Mit dem hier beschriebenen Verfahren und System wird die Berechnung einer sicheren Begrenzungsbox 4, d. h. der Fehlerobergrenze PL, für ein rein landmarkenbasiertes Positionierungsverfahren ermöglicht. Dies hat zwei deutliche Vorteile gegenüber bestehenden Konzepten. Es wird eine sichere Positionierung in der Karte in Szenarien und/oder Umgebungen ermöglicht, in denen GNSS-basierte Methoden nicht verfügbar sind. Des Weiteren wird eine Kombination mit einem GNSS-basierten Integritätsmonitoring ermöglicht, um eine kleinere und/oder sicherere Begrenzungsbox 4 zu erhalten. Bei einer solchen Kombination kann durch eine Schnittmenge beider Fehlerobergrenzen PL eine kleinere Begrenzungsbox 4 mit einer vergleichbaren Falschmeldungsrate erreicht werden. Durch eine Vereinigung der beiden Fehlerobergrenzen PL wird eine etwas größere Begrenzungsbox 4 ermittelt, aber mit einer Falschmeldungsrate, die erheblich niedriger ist als alles, was mit einer einzelnen Methode erreicht werden könnte.

Im Folgenden werden Voraussetzungen zur Durchführung dieses Verfahrens beschrieben. Die landmarkenbasierte Positionierung muss in der Lage sein, alle Positionierungsinformationen P, einschließlich Unsicherheiten und Unklarheiten, mit möglichst geringem Verlust einzubeziehen und zu verfolgen. Daher wird das Verfahren vorzugsweise als probabilistisches Filter PF implementiert. Das probabilistische Filter bewertet die Positionshypothesen mit einem Verteilungsmodell für korrekte Informationen und einem Verteilungsmodell für irreführende Informationen und ermittelt, wie gut eine Positionshypothese mit dem Verteilungsmodell für korrekte Informationen übereinstimmt gegenüber der Übereinstimmung mit dem Verteilungsmodell für irreführende Informationen. Diese Bewertung basiert auf dem Gedanken, dass Positionshypothesen, die derart verteilt sind, dass sie sich in räumlicher Nähe häufen, auf korrekten Landmarken-Assoziationen, also auf korrekten Informationen beruhen, und dass Positionshypothesen, für die dies nicht zutrifft, auf falschen Landmarken-Assoziationen, d.h. auf irreführenden Informationen beruhen. Das Ergebnis dieser Ermittlung ist der Integritätswert. Er ist umso höher je besser die Positionshypothese mit dem Verteilungsmodell für korrekte Informationen übereinstimmt gegenüber der Übereinstimmung mit dem Verteilungsmodell für irreführende Informationen.

Parametrische Darstellungen von Positionierungsinformationen P, zum Beispiel als gaussian probability distribution (Normalverteilung oder Gauß-Verteilung) sollten nur dann verwendet werden, wenn die tatsächliche Verteilung tV auch der Modellverteilung MV in den hinteren Bereichen hB der Verteilung entspricht. Figur 5 zeigt die Modellverteilung MV und die tatsächliche Verteilung tV der Positionierungsinformationen P bezüglich einer Wegstrecke x. Andernfalls sollten nichtparametrische Darstellungen bevorzugt werden, zum Beispiel durch approximieren der vollständigen Verteilung als Histogramm.

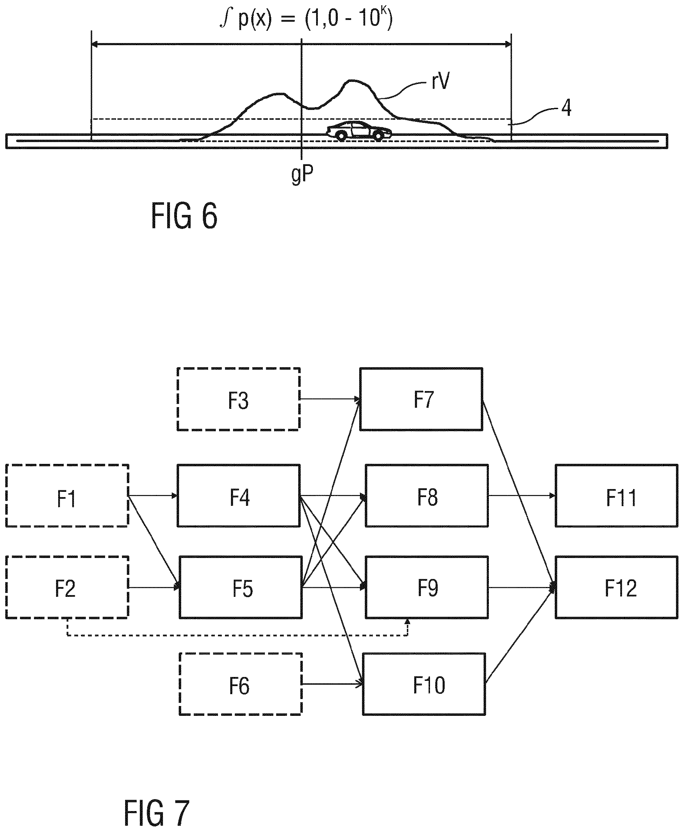

Nur dann kann, wie in Figur 6 gezeigt, eine Fehlerüberschreitung durch Integration über die resultierende Verteilung rV abgeleitet werden, bis eine kumulative Wahrscheinlichkeit nahe 1,0 erreicht ist. Wie nahe an 1,0 ist abhängig von der vorgegebenen zulässigen Fehlerrate der Fehlerobergrenze PL, d. h. von einem zulässigen Prozentsatz für den Fall, dass die tatsächliche Position außerhalb der Fehlerobergrenze PL sein darf.

In Figur 7 werden Zusammenhänge dargestellt, welche entweder zu einem nützlichen Informationsgewinn oder zu einem irreführenden Informationsgewinn führen. Dabei haben die dargestellten Felder jeweils folgende Bedeutung:
- F1: Ereignis: Landmarkenobjekt vorhanden.
- F2: Ereignis: Okklusion.
- F3: Ereignis: Falschinformation Landmarkenobjekt in Karte.
- F4: Korrekte Information Landmarkenobjekt in Karte.
- F5: Korrekte Information Landmarkenobjekt von Sensorik erfasst.
- F6: Ereignis: Falschinformation aus Sensorerfassung. Dies umfasst die Erfassung jedes nicht in der Karte verzeichneten Landmarkenobjekts, auch solcher, die tatsächlich existieren.
- F7: Ein aus einer Falschinformation resultierendes Landmarkenobjekt in der Karte und ein Landmarkenobjekt, welches korrekt von der Sensorik erfasst wurde, passen zusammen.
- F8: Ein aus einer korrekten Information resultierendes Landmarkenobjekt in der Karte und ein Landmarkenobjekt, welches korrekt von der Sensorik erfasst wurde, passen zusammen.
- F9: Ein aus einer korrekten Information resultierendes Landmarkenobjekt in der Karte und ein falsches Landmarkenobjekt, welches korrekt von der Sensorik erfasst wurde, passen zusammen.
- F10: Ein aus einer korrekten Information resultierendes Landmarkenobjekt in der Karte und ein aus der Falschinformation aus der Sensorerfassung resultierendes Landmarkenobjekt passen zusammen.
- F11: Nützlicher Informationsgewinn.
- F12: Irreführender Informationsgewinn.

Im Folgenden wird der Umgang mit irreführenden Informationen beschrieben. Das Problem ist, dass probabilistische Filter PF mit Unsicherheit und irreführenden Informationen umgehen können, solange ihre Statistiken korrekt modelliert sind und Datenmengen statistisch relevant sind. Aufgrund der Seltenheit von Landmarkenobjekten LMS, LMK kann der Anteil irreführender Informationen jedoch für jede Szenerie sehr unterschiedlich sein. Dies erschwert es, Fehlerobergrenzen PL zu berechnen, die nicht immens groß sind.

Die Lösung dieses Problems liegt darin, niemals neue Informationen sofort einzubeziehen, sondern alles zu verfolgen, bis ein ausreichend großer Probensatz verfügbar ist, und wiederholt alle möglichen Übereinstimmungen zwischen Sensor-Landmarkenobjekte und Karten-Landmarkenobjekten zu analysieren, um ihre Wahrscheinlichkeit zu bestimmen, schädliche Informationen zu sein.

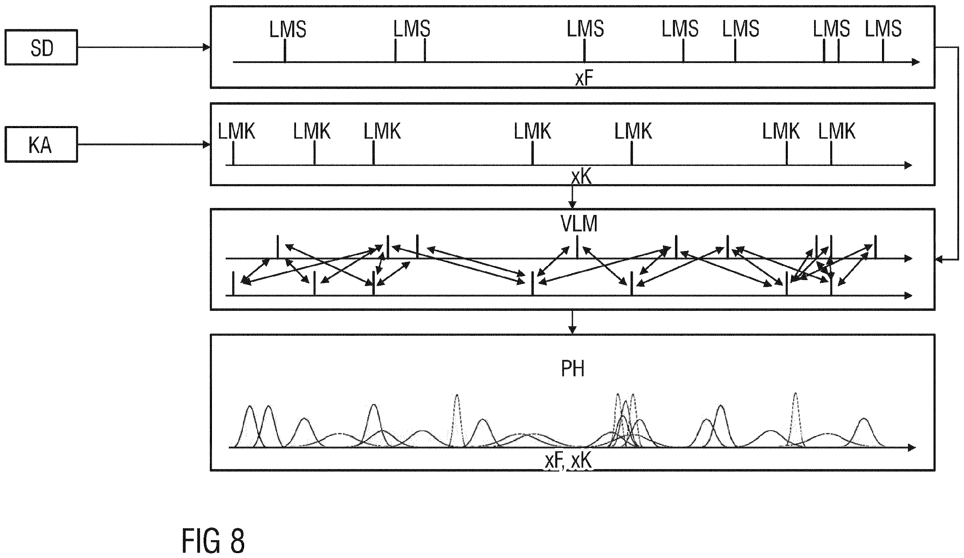

Das Verfahren umfasst somit, wie oben bereits beschrieben, drei Schritte. Im ersten Schritt wird der Vergleich VLM der Sensor-Landmarkenobjekte LMS aus den Sensordaten SD mit den Karten-Landmarkenobjekten LMK aus der Karte durchgeführt, wie in Figur 8 gezeigt. Hierzu wird aus den Sensordaten SD der Sensorik des Fahrzeugs 1 ein räumliches Muster der Sensor-Landmarkenobjekte LMS über eine Wegstrecke xF des Fahrzeugs 1 hinweg ermittelt. Aus dem Kartenausschnitt KA wird ein räumliches Muster der Karten-Landmarkenobjekte LMK im selben räumlichen Rahmen über eine Kartenwegstrecke xK hinweg ermittelt. Nun wird der Vergleich VLM dieser Landmarkenobjekte LMS, LMK, genauer gesagt ein Vergleich VLM der Muster der Landmarkenobjekte LMS, LMK, durchgeführt. Daraus werden mehrere Positionshypothesen PH ermittelt. Bis dahin ist das Verfahren vorteilhafterweise zumindest im Wesentlichen identisch zu dem in Figur 1 dargestellten und beschriebenen Verfahren, wobei hier vorteilhafterweise alle durch die Sensorik des Fahrzeugs 1 erfassten Sensor-Landmarkenobjekte LMS, insbesondere auch bereits vom Fahrzeug 1 passierte Sensor-Landmarkenobjekte LMS, berücksichtigt werden. Beim Vergleich VLM werden somit mitgeschriebene Historien der Sensor- Landmarkenobjekten LMS mitberücksichtigt.

Bei dem Vergleich VLM werden alle möglichen Landmarken-Assoziationen berücksichtigt, nicht nur nächstgelegene Landmarkenobjekte, so dass eine Mehrzahl von Positionshypothesen PH ermittelt werden. Jede Positionshypothese PH hat eine räumliche Ungewissheit basierend auf Messrauschen, Kartenfehler und Odometrie-Unsicherheiten (einige Beobachtungen könnten ziemlich weit dahinter liegen).

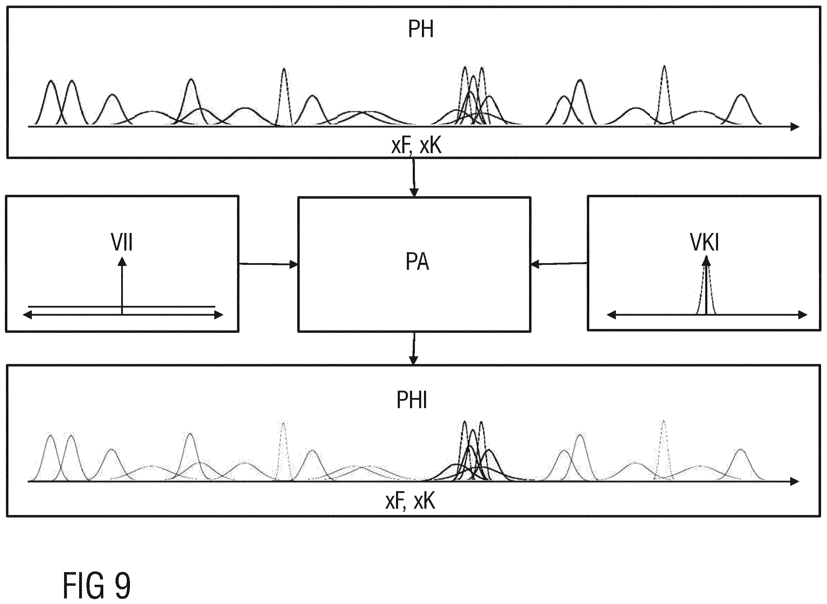

Im zweiten Schritt des Verfahrens wird die probabilistische Analyse PA durchgeführt, wie in Figur 9 gezeigt. Dabei wird durch eine Analyse aller Positionshypothesen PH für jede Positionshypothese PH jeweils ein Integritätswert ermittelt. Hierzu wird mit den Positionshypothesen PH, einem Verteilungsmodell VII irreführender Informationen und einem Verteilungsmodell VKI korrekter Informationen die probabilistische Analyse PA durchgeführt. Daraus resultieren die Positionshypothesen PHI mit Integritätswerten.

Eine falsche Information folgt einer anderen Verteilung als die korrekte Information, normalerweise sehr unabhängig von der tatsächlichen Position, zum Beispiel eine gleiche räumliche Verteilung. Die Nicht-Ausreißer-Übereinstimmungen hängen notwendigerweise mit der tatsächlichen Position zusammen und bilden jede mögliche räumliche Form um sie herum, zum Beispiel eine Gauss-Verteilung. Analysiert man alle Positionshypothesen PH in Bezug zueinander, erhält man eine Schätzung über die Wahrscheinlichkeit, dass jede von ihnen aus einer der beiden Verteilungen stammt, und somit ihre Wahrscheinlichkeit, eine irreführende Information zu sein.

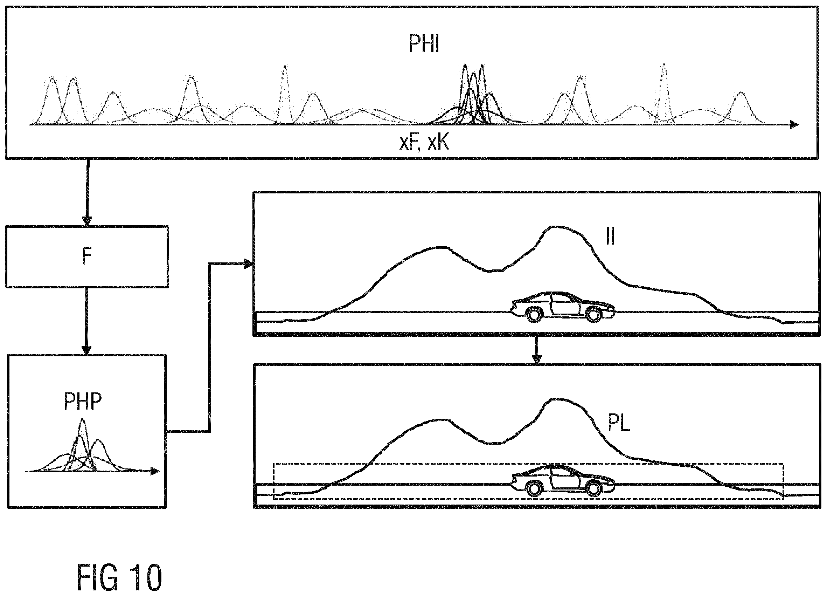

Im dritten Schritt des Verfahrens erfolgt eine Einbindung von Informationen, wie in Figur 10 gezeigt. Durch eine Filterung F der Positionshypothese PHI nach der Größe ihrer Integritätswerten bezüglich dem vorgegebenen Integritätsgrenzwert wird eine Untermenge an Positionshypothese PHP mit einer für die Positionsbestimmung des Fahrzeugs 1 geforderten Intergität ermittelt. Das heißt, sämtliche Positionshypothesen PHP dieser Untermenge weisen einen Integritätswert auf, der mindestens dem vorgegebenen Integritätsgrenzwert entspricht. Die einzelnen Positionshypothesen dieser Untermenge repräsentieren jeweils Einzelwahrscheinlichkeitsverteilungen für die Fahrzeugposition. Anschließend wird aus der Menge dieser Einzelwahrscheinlichkeitsverteilungen, d.h. aus der gesamten Untermenge an Positionshypothesen, die dieser gesamten Untermenge entsprechende Wahrscheinlichkeitsverteilung der Fahrzeugposition ermittelt. Daraufhin wird durch eine Integration II über diese Wahrscheinlichkeitsverteilung die Fehlerobergrenze PL ermittelt. Die Ermittlung der Fehlerobergrenze PL erfolgt dabei wie in Figur 6 gezeigt. Die dort gezeigte Begrenzungsbox 4 entspricht der Fehlerobergrenze PL.

Die Positionshypothesen PHI mit Integritätswerten werden nach ihren Chancen gefiltert, irreführende Informationen zu sein. Die Schwelle hängt von der vorgegebenen zulässigen Fehlerrate ab. Je niedriger der Schwellenwert ist, desto weniger Positionshypothesen PHI mit Integritätswert werden als gut genug, d. h. als eine ausreichende Positionsgenauigkeit aufweisend, erachtet, was die Verfügbarkeit der Positionierung einschränkt. Wenn nur die "guten" Informationen verwendet werden, wird sichergestellt, dass das berechnete Unsicherheitsprofil der Position den tatsächlichen Fehler nicht unterschätzt. Letztendlich ermöglicht dies die Ableitung von Fehlerobergrenzen aus diesem Unsicherheitsprofil.

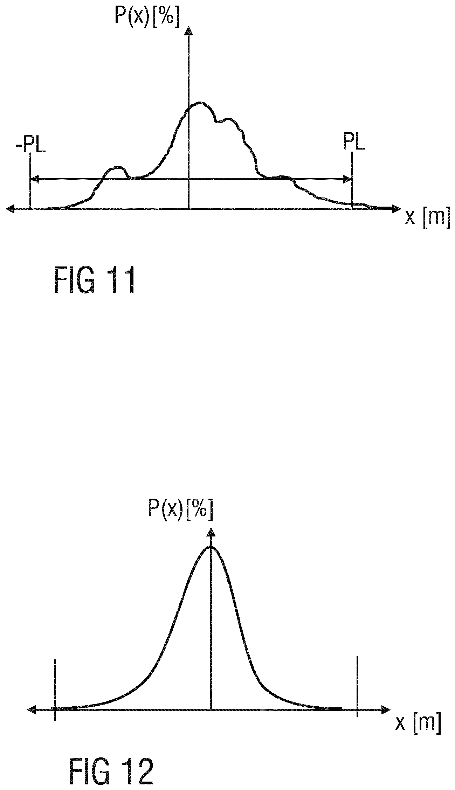

Abschließend wird noch die Fehlerobergrenze PL erläutert. Figur 11 zeigt eine unbekannte tatsächliche Verteilung von Fehlern zwischen der negativen und positiven Fehlerobergrenze PL. µ ist der Mittelwert und Sigma die Wurzel der normalisierten Summe der Abweichungen vom Mittelwert. Figur 12 zeigt eine angenommene Verteilung von Fehlern.

Die angegebene Genauigkeit ist die typische Abweichung vom tatsächlichen Wert, d. h. Sigma der tatsächlichen Verteilung. Die spezifizierte Fehlergrenze PL ist die Begrenzungsbox 4, die die tatsächliche Fahrzeugposition bis auf einen zulässigen Restfehler von zum Beispiel 10e-7 Fehlern pro km beinhaltet. Die angegebene Verfügbarkeit ist der Prozentsatz der Zeit, in der das System diese Fehlerobergrenze PL bereitstellen kann.

Die Genauigkeit kann größtenteils mit großen Testprobensätzen und einer Grundwahrheitsreferenz verifiziert werden. Eine Online-Optimierungssoftware erzeugt auch Sigma-Werte, um die geschätzte Genauigkeit anzuzeigen, aber dies basiert auf einer Modellverteilung von Fehlern, die sich gravierend von der tatsächlichen Verteilung unterscheiden kann. Daher ist dies nicht die echte Präzision, und nicht ausreichend, um eine Fehlerobergrenze PL zu ermitteln, so dass ein zusätzliches Monitoring notwendig ist. Im Gegensatz dazu kann mit dem oben beschriebenen Verfahren die Fehlerobergrenze PL ermittelt werden.

## Patentansprüche

1. Verfahren zur Positionsbestimmung eines Fahrzeugs (1), wobei
- durch einen Vergleich (VLM) von mittels einer Sensorik des Fahrzeugs (1) erfassten Sensor-Landmarkenobjekten (LMS) mit in einer Karte, insbesondere in einem Kartenausschnitt (KA), hinterlegten Karten-Landmarkenobjekten (LMK) Assoziationen zwischen den Sensor-Landmarkenobjekten (LMS) und Karten-Landmarkenobjekten (LMK) gebildet werden,
**dadurch gekennzeichnet, dass**
- anhand der Assoziationen eine Mehrzahl von Positionshypothesen (PH) als Annahmen für die Fahrzeugposition ermittelt werden,
- durch eine probabilistische Analyse (PA) der Positionshypothesen (PH) für jede Positionshypothese (PHI) ein Integritätswert ermittelt wird,
- durch eine Filterung (F) der Positionshypothesen (PHI) nach ihren Integritätswerten eine Untermenge an Positionshypothesen (PHP) ermittelt wird, deren Integritätswerte eine vorgegebene Anforderung erfüllen,
- aus der Untermenge der Positionshypothesen (PHP) eine Wahrscheinlichkeitsverteilung der Fahrzeugposition ermitteltwird.

2. Verfahren nach Anspruch 1,
**dadurch gekennzeichnet, dass** aus der ermittelten Wahrscheinlichkeitsverteilung der Fahrzeugposition und einer vorgegebenen zulässigen Fehlerrate eine wahrscheinlichste Position des Fahrzeugs als Fahrzeugposition ermittelt wird und eine Fehlerobergrenze (PL) für die Fahrzeugposition ermittelt wird.

3. Verfahren nach Anspruch 1 oder 2,
**dadurch gekennzeichnet, dass** für den Vergleich (VLM) der Sensor- und Karten-Landmarkenobjekte (LMS, LMK) auch bereits vom Fahrzeug (1) passierte Sensor-Landmarkenobjekte (LMS) verwendet werden.

4. Verfahren nach einem der vorhergehenden Ansprüche,
**dadurch gekennzeichnet, dass** für den Vergleich (VLM) der Sensor- und Karten-Landmarkenobjekte (LMS, LMK) über einen vorgegebenen Zeitraum und/oder über eine vorgegebene Streckenlänge mittels der Sensorik des Fahrzeugs (1) erfasste Sensor-Landmarkenobjekte (LMS) verwendet werden.

5. Verfahren nach einem der vorhergehenden Ansprüche,
**dadurch gekennzeichnet, dass** die ermittelte Fahrzeugposition inklusive der ermittelten Fehlerobergrenzen (PL) der Fahrzeugposition und eine mittels eines globalen Navigationssatellitensystems ermittelte Position des Fahrzeugs (1) inklusive einer Fehlerobergrenze dieser Position miteinander fusioniert werden.

## Claims

1. Method for determining the position of a vehicle (1), wherein
- by a comparison (VLM) of landmark objects (LMS) detected by means of a sensor system of the vehicle (1) to a map, in particular to landmark objects (LMK) stored in a map section (KA), associations are formed between the sensor landmark objects (LMS) and the map landmark objects (LMK),
**characterised in that**
- a plurality of position hypotheses (PH) is determined using the associations as assumptions for the vehicle position,
- an integrity value is determined for each position hypothesis (PHI) by a probabilistic analysis (PA) of the position hypotheses (PH),
- a sub-quantity of position hypotheses (PHP), the integrity values of which meet preset requirements, is determined by a filtering (F) of the position hypotheses (PHI) by their integrity values,
- a probability distribution of the vehicle position is determined from the sub-quantity of the position hypotheses (PHP).

2. Method according to claim 1,
**characterised in that** a most probable position of the vehicle is determined as vehicle position from the determined probability distribution of the vehicle position and a preset permissible error rate, and an upper error limit (PL) is determined for the vehicle position.

3. Method according to claim 1 or 2,
**characterised in that** sensor landmark objects (LMS) already passed by the vehicle (1) are also used for the comparison (VLM) of the sensor and map landmark objects (LMS, LMK).

4. Method according to any of the preceding claims,
**characterised in that** sensor landmark objects (LMS) detected by the sensor system of the vehicle (1) over a preset period of time and/or a preset route length are used for the comparison (VLM) of the sensor and map landmark objects (LMS, LMK).

5. Method according to any of the preceding claims,
**characterised in that** the determined vehicle position inclusive of the determined upper error limits (PL) of the vehicle position and a position of the vehicle (1) determined by means of a global navigation satellite system inclusive of an upper error limit of said position are amalgamated.

## Revendications

1. Procédé de détermination de position d'un véhicule automobile (1),
- par comparaison (VLM) d'objets de point de repère de capteur détectés au moyen d'une analyse sensorielle du véhicule automobile (1) avec des objets de repère de carte déposés dans une carte, en particulier dans une partie de carte (KA) des associations étant formées entre les objets de point de repère de capteur (LMS) et les objets de point de repère de carte (LMK),
- **caractérisé en ce qu'**
- les associations permettent de déterminer une pluralité d'hypothèses de position (PH) pour chaque hypothèse de position (PHI) en tant que suppositions pour la position du véhicule automobile,
- par une analyse probabilistique (PA) des hypothèses de position (PH) pour chaque hypothèse de position (PHI) est déterminée une valeur d'intégrité,
- par un filtrage (F) des hypothèses de position (PHI) selon leurs valeurs d'intégrité un sous-ensemble d'hypothèses de position (PHP) est déterminée, leurs valeurs d'intégrité satisfaisant une exigence prédéfinie,
- à partir d'un sous-ensemble des hypothèses de position (PHP) est déterminée une répartition de probabilité de la position du véhicule automobile.

2. Procédé selon la revendication 1, **caractérisé en ce qu'**à partir de la répartition de probabilité déterminée de la position du véhicule automobile et à partir d'un taux d'erreur admissible prédéfini est déterminée la position la plus probable du véhicule automobile en tant que position de véhicule et **en ce qu'**une limite supérieure d'erreur (PL) est déterminée pour la position du véhicule automobile.

3. Procédé selon la revendication 1 ou la revendication 2, **caractérisé en ce que** pour la comparaison (VLM) on utilise l'objet de point de repère de carte et de capteur (LMS, LMK) ainsi que des objets de point de repère de carte-détecteur déjà passé devant le véhicule (1).

4. Procédé selon l'une quelconque des revendications précédentes, **caractérisé en ce que** pour la comparaison (VLM) on utilise l'objet de point de repère de carte et de capteur (LMS, LMK) pendant une durée prédéfinie et/ou une longueur de parcours prédéfinie au moyen des objets de point de repère de carte-capteur (LMS) détectés par l'analyse sensorielle du véhicule automobile (1).

5. Procédé selon l'une quelconque des revendications précédents, **caractérisé en ce que** la position du véhicule automobile déterminée y compris les limites supérieures d'erreur déterminées (PL) de la position du véhicule automobile (1) et une position déterminée au moyen d'un système de navigation globale par satellite sont fusionnées les unes avec les autres y compris une limite supérieure d'erreur de cette position.
